# EUROPÄISCHE PATENTANMELDUNG

(11) **EP 2 565 497 A1**
(43) Veröffentlichungstag der Anmeldung: **06.03.2013**
(21) Anmeldenummer: 11179300.6
(22) Anmeldetag: 30.08.2011
(51) Int. Cl.: F16H 57/023, F16H 57/08, F16H 1/28, F16D 1/09

(54) **Planetengetriebe für eine Windkraftanlage oder eine Mühlenantriebssystem**

(71) Anmelder: Siemens Aktiengesellschaft, 80333 München (DE); Winergy AG, 46562 Voerde (DE)
(72) Erfinder: Dinter, Ralf Martin, 45888 Gelsenkirchen (DE); Klein-Hitpass, Arno, 52074 Aachen (DE); Mertens, Stefan, 52066 Aachen (DE)

(57) **Zusammenfassung**

Die Erfindung betrifft ein Planetengetriebe mit einem Sonnenrad, einem Hohlrad (64) und mehreren in einem Planetenträger gelagerten Planetenräder, die sowohl mit dem Sonnenrad als auch mit dem Planetenrad kämmen. Außerdem sind eine Antriebs- und eine Abtriebswelle vorgesehen, die in einem Getriebegehäuse (94) gelagert sind. Am Hohlrad (64) ist ein kombiniertes Zentrierungs-und Verbindungselement angeformt, das mit einem korrespondierenden kombinierten Zentrierungs- und Verbindungselement am Getriebegehäuse (94) in radialer Richtung formschlüssig und in Umfangsrichtung kraftschlüssig verbunden ist.

## Beschreibung

Planetengetriebe bieten gegenüber herkömmlichen Stirnrad- und Kegelstirnradgetrieben hinsichtlich Leistungsdichte und spezifischem Drehmoment deutliche Vorteile und umfassen ein Sonnenrad, einen Planetenradträger mit Planetenrädern sowie ein innenverzahntes Hohlrad. Bedingt durch eine zylindrische Grundform der Hohlräder weisen Planetengetriebe für industrielle Anwendungen häufig eine zylindrische Bauform auf. Planetengetriebe können als Aufsteckgetriebe mit einer Drehmomentstütze, als Anschraub- bzw. Anflanschgetriebe oder in Fußaufstellung mit zusätzlichem Gestell montiert werden.

Verzahnungstaugliche Gußwerkstoffe, wie ADI-900, ermöglichen Konstruktionen, bei denen Gehäuseteile und innenverzahnte Hohlräder in einer Integralbauweise zusammengefaßt sind. Nachteilig hierbei ist, daß hochwertiger Verzahnungswerkstoff in unwirtschaftlicher Weise auch für Gehäuseelemente verwendet wird, die weniger hochwertige Werkstoffe erfordern. Zur Verbindung eines Hohlrads mit einem Gehäuseteil werden bisher Flanschverbindungen verwendet, die häufig mit zusätzlichen formschlüssigen Sicherungselementen versehen sind. Alternativ dazu können Zentriersitze am Hohlrad bzw. Gehäuseteil vorgesehen sein.

Aus DE 10 2005 029 858 A1 ist eine Getriebekombination bekannt, die eine Planetenstufe und eine Stirnradstufe umfaßt und ein blockförmiges Gehäuse aufweist. Das Gehäuse ist stirnseitig durch einen Deckel verschlossen. Außerdem ist in US 2008 045374 A1 ein Getriebegehäuse mit quaderförmiger Grundstruktur beschrieben. Aus DE 102 51 499 A1 ist eine Getriebekombination mit einem modularen Aufbau für kaskadierbare Planetenstufen und komplementären Flanschzonen an Getriebegehäuseabschnitten beschrieben.

In US 1,945,361 ist ein Planetengetriebe mit einer Antriebs- und einer Abtriebswelle, die in einem Getriebegehäuse gelagert sind, sowie einer ersten und zweiten Planetenstufe beschrieben. Das Planetengetriebe weist einen einstückigen Getriebegehäusemantel auf, der die erste und zweite Planetenstufe umgibt und stirnseitig jeweils durch einen Gehäusedeckel verschlossen ist. Im Innenraum des Getriebegehäuses ist ein Abstandselement angeordnet, das eine Trennwand bildet und durch das der Innenraum in zwei Teilräume unterteilt ist. Dabei nimmt jeder Teilraum jeweils eine Planetenstufe auf. Die Planetenstufen sind miteinander durch eine Welle verbunden, die durch eine Öffnung im Abstandselement geführt ist. Hohlräder der Planetenstufen sind zwischen den Gehäusedeckeln sowie dem Abstandselement eingeklemmt und damit nur reibschlüssig mit dem Getriebegehäuse verbunden. Für höhere Leistungsklassen ist das aus US 1,945,361 bekannte Planetengetriebe daher ungeeignet.

Aus EP 2 169 264 A1 ist ein Planetengetriebe bekannt, das eine Antriebs- und eine Abtriebswelle aufweist, die in einem Getriebegehäuse gelagert sind, und zumindest eine erste und zweite Planetenstufe aufweist. Außerdem ist ein einstückiger Getriebegehäusemantel vorgesehen, der die erste und zweite Planetenstufe umgibt und stirnseitig jeweils durch einen Gehäusedeckel verschlossen ist. Im Innenraum des Getriebegehäuses ist zumindest eine Trennwand angeordnet, durch die der Innenraum in zumindest zwei Teilräume unterteilt ist. Jeder Teilraum nimmt jeweils eine Planetenstufe auf. Die Planetenstufen sind durch eine Welle miteinander verbunden, die durch eine Öffnung in der Trennwand geführt ist. Hohlräder der Planetenstufen sind stirnseitig an der Trennwand befestigt.

Der vorliegenden Erfindung liegt die Aufgabe zugrunde, ein Planetengetriebe anzugeben, bei dem unerwünschte radiale Relativbewegungen zwischen Getriebegehäuse und Hohlrad vermieden werden.

Diese Aufgabe wird erfindungsgemäß durch ein Planetengetriebe mit den in Anspruch 1 angegebenen Merkmalen gelöst. Vorteilhafte Weiterbildungen der vorliegenden Erfindung sind in den abhängigen Ansprüchen angegeben.

Das erfindungsgemäße Planetengetriebe weist ein Sonnenrad, ein Hohlrad und mehrere in einem Planetenträger gelagerte Planetenräder auf, die sowohl mit dem Sonnenrad als auch mit dem Planetenrad kämmen. Außerdem sind eine Antriebs- und eine Abtriebswelle vorgesehen, die in einem Getriebegehäuse gelagert sind. Am Hohlrad ist ein kombiniertes Zentrierungs- und Verbindungselement angeformt, das mit einem korrespondierenden kombinierten Zentrierungs- und Verbindungselement am Getriebegehäuse in radialer Richtung formschlüssig und in Umfangsrichtung kraftschlüssig verbunden ist. Auf diese Weise kann sowohl eine Innenzentrierung als auch eine Außenzentrierung zwischen Hohlrad und Getriebegehäuse realisiert werden. Durch eine in Umfangsrichtung kraftschlüssige Verbindung zwischen Hohlrad und Getriebegehäuse können zusätzlich Relativverschiebungen zwischen beiden Bauteilen vermieden werden, ohne daß es hierzu beispielsweise einer Verstiftung bedarf.

Das kombinierte Zentrierungs- und Verbindungselement am Hohlrad und das korrespondierende Zentrierungs- und Verbindungselement am Getriebegehäuse sind vorzugsweise als Ring-Nut-Verbindung ausgestaltet. Dabei kann das kombinierte Zentrierungs- und Verbindungselement am Hohlrad ein sich axial erstreckender Ring mit konischem Profil sein, der in eine sich axial erstreckende umlaufende Nut am Getriebegehäuse eingreift, die das korrespondierende kombinierte Zentrierungs- und Verbindungselement bildet. Alternativ dazu kann das korrespondierende kombinierte Zentrierungs- und Verbindungselement am Getriebegehäuse ein sich axial erstreckender Ring mit konischem Profil sein, der in entsprechender Weise in eine sich axial erstreckende umlaufende Nut am Hohlrad eingreift, die das kombinierte Zentrierungs- und Verbindungselement bildet. Damit können das kombinierte Zentrierungs-und Verbindungselement am Hohlrad und das korrespondierende Zentrierungs- und Verbindungselement am Getriebegehäuse in vorteilhafter Weise als Kegelpreßverband ausgestaltet sein. Eine Fügekraft des Kegelpreßverbands kann beispielsweise mittels Schraubverbindungen realisiert sein. Zusätzlich oder alternativ dazu können Nut und Ring zumindest in einem Bereich kegeliger Kontaktflächen miteinander verklebt sein.

Entsprechend einer weiteren vorteilhaften Ausgestaltung der vorliegenden Erfindung weist die Nut eine jeweils zum Ring korrespondierende innere und äußere kegelige Kontaktfläche auf. Dabei kann die Nut eine Hinterschneidung und zusätzlich an der Hinterschneidung eine Öffnung für ein druckbehaftetes Einbringen einer Flüssigkeit zum Lösen der Ring-Nut-Verbindung aufweisen. Dies ermöglicht eine besonders einfache Demontage von Hohlrad und Getriebegehäuse.

Vorzugsweise weist der Ring eine konische Innen- und Außenfläche mit einem ersten Öffnungswinkel auf, während die Nut eine konische Innen- und Außenfläche mit einem zweiten Öffnungswinkel aufweist, wobei der erste und zweite Öffnungswinkel verschieden sind. Ist der erste Öffnungswinkel größer als der zweite Öffnungswinkel, ergibt sich in vorteilhafter Weise eine erhöhte Fügekraft des Kegelpreßverbands zwischen Hohlrad und Getriebegehäuse.

Die vorliegende Erfindung wird nachfolgend an einem Ausführungsbeispiel anhand der Zeichnung näher erläutert. Es zeigt
- Figur 1: eine schematische Darstellung eines Planetengetriebes,
- Figur 2: eine schematische Darstellung einer ersten Variante einer Hohlrad-Gehäuse-Verbindung,
- Figur 3: eine schematische Darstellung einer zweiten Variante einer Hohlrad-Gehäuse-Verbindung,
- Figur 4: eine schematische Darstellung einer dritten Variante einer Hohlrad-Gehäuse-Verbindung,
- Figur 5: eine schematische Darstellung einer vierten Variante einer Hohlrad-Gehäuse-Verbindung,
- Figur 6: eine schematische Darstellung einer fünften Variante einer Hohlrad-Gehäuse-Verbindung.

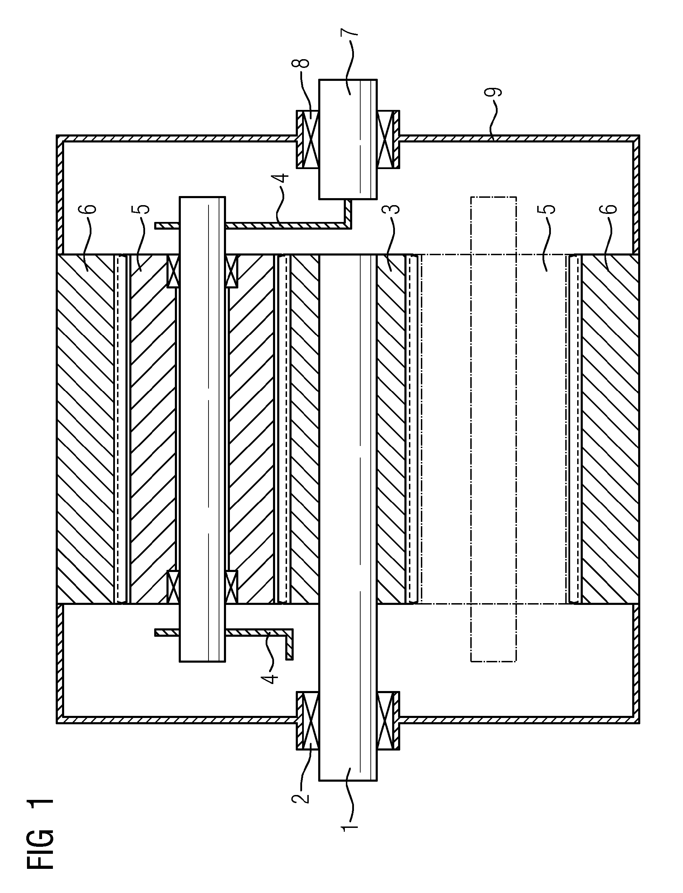

Das in Figur 1 dargestellte Planetengetriebe umfaßt ein mit einer Antriebswelle 1 verbundenes Sonnenrad 3, ein Hohlrad 6 und einem Planetenträger 4, in dem mehrere Planetenräder 5 gelagert sind und der mit einer Abtriebswelle 7 verbunden ist. Das Hohlrad 6 ist im vorliegenden Ausführungsbeispiel in ein mehrteiliges Getriebegehäuse 9 integriert, das auch Lagersitze für Lager 2, 8 der Antriebswelle 1 und Abtriebswelle 7 aufweist. Die Lagersitze können beispielsweise in Gehäusedeckel integriert sein.

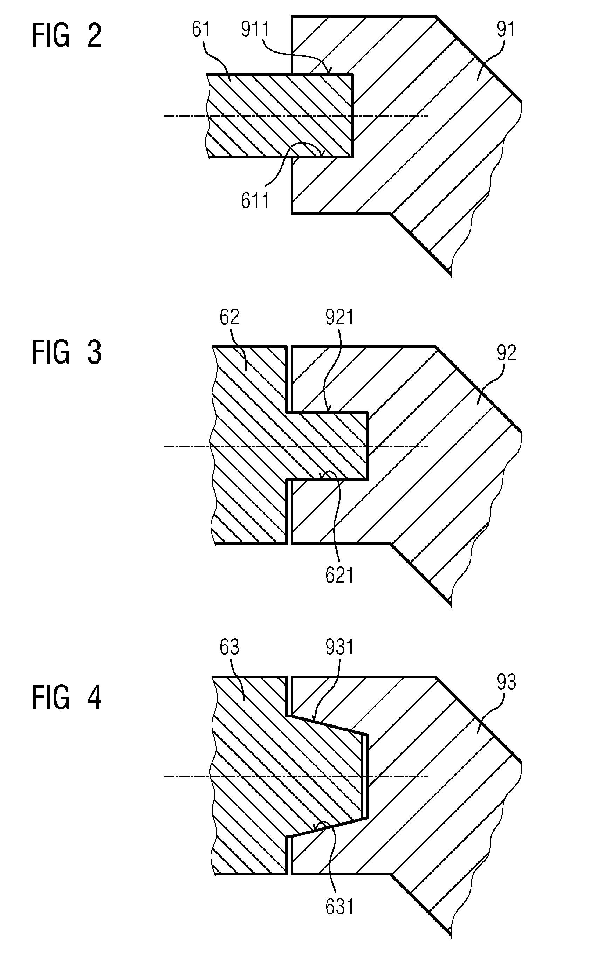

Bei allen in den Figuren 2 bis 6 dargestellten Varianten einer Hohlrad-Gehäuse- Verbindung ist am Hohlrad 61-65 ein kombinierten Zentrierungs- und Verbindungselement angeformt, das mit einem korrespondierenden kombinierten Zentrierungs- und Verbindungselement am Getriebegehäuse 91-95 in radialer Richtung formschlüssig und in Umfangsrichtung kraftschlüssig verbunden ist. Das kombinierte Zentrierungs- und Verbindungselement am Hohlrad 61-65 und das korrespondierende Zentrierungs-und Verbindungselement am Getriebegehäuse 91-95 sind dabei jeweils als Ring-Nut-Verbindung ausgestaltet.

Entsprechend der ersten bis dritten Variante und der fünften Variante ist das Hohlrad am Getriebegehäuse zentriert, während das Getriebegehäuse bei der vierten Variante am Hohlrad zentriert wird. Darüber hinaus ist die Ring-Nut-Verbindung bei den ersten beiden Varianten zylindrisch ausgestaltet, während sie bei den übrigen Varianten konisch ausgeführt ist.

Bei der in Figur 2 dargestellten ersten Variante ist eine ringförmige Nut mit einer inneren und äußeren zylindrischen Kontaktfläche 911 am Getriebegehäuse 91 vorgesehen. In entsprechender Weise ist an das Hohlrad 61 ein zylindrischer Ring mit einer inneren und äußeren zylindrischen Kontaktfläche 611 angeformt. Eine Verklebung o.g. Bauteile kann bei der ersten Variante an Nutgrund oder an Flanken der Ring-Nut-Verbindung erfolgen.

Die in Figur 3 dargestellten zweiten Variante unterscheidet sind von der ersten Variante dadurch, daß Hohlrad 62 und Getriebegehäuse 92 nicht nur an den Kontaktflächen 621, 921 im Bereich des Nutgrunds und der Flanken miteinander verklebt sind, sondern auch an sich an den angeformten Ring anschließenden Schultern des Hohlrads 62, die am Getriebegehäuse 92 stirnseitig anliegen.

Bei der dritten und fünften Variante ist das kombinierte Zentrierungs- und Verbindungselement am Hohlrad 63, 65 jeweils ein sich axial erstreckender Ring mit konischem Profil, der in eine sich axial erstreckende umlaufende Nut am Getriebegehäuse 93, 95 eingreift, die das korrespondierende kombinierte Zentrierungs- und Verbindungselement bildet. Dagegen ist das korrespondierende kombinierte Zentrierungs- und Verbindungselement am Getriebegehäuse 94 bei der vierten Variante ein sich axial erstreckender Ring mit konischem Profil, der in eine sich axial erstreckende umlaufende Nut am Hohlrad 64 eingreift, die in diesem Fall das kombinierte Zentrierungs-und Verbindungselement bildet. Insgesamt sind bei allen in den Figuren 4 bis 6 dargestellten Varianten das kombinierte Zentrierungs- und Verbindungselement am Hohlrad 63-65 und das korrespondierende Zentrierungs- und Verbindungselement am Getriebegehäuse 93-95 als Kegelpreßverband ausgestaltet. Dabei weist die Nut eine jeweils zum Ring korrespondierende innere und äußere kegelige Kontaktfläche auf, die mit jeweils einer entsprechenden inneren bzw. äußeren Kontaktfläche am Ring zusammenwirkt. Grundsätzlich können bei allen in den Figuren 4 bis 6 dargestellten Varianten Nut und Ring zumindest in einem Bereich kegeliger Kontaktflächen 631, 641, 651, 931, 941, 951 miteinander verklebt sein. Alternativ oder zusätzlich dazu kann eine Fügekraft des Kegelpreßverbands mittels Schraubverbindungen realisiert sein.

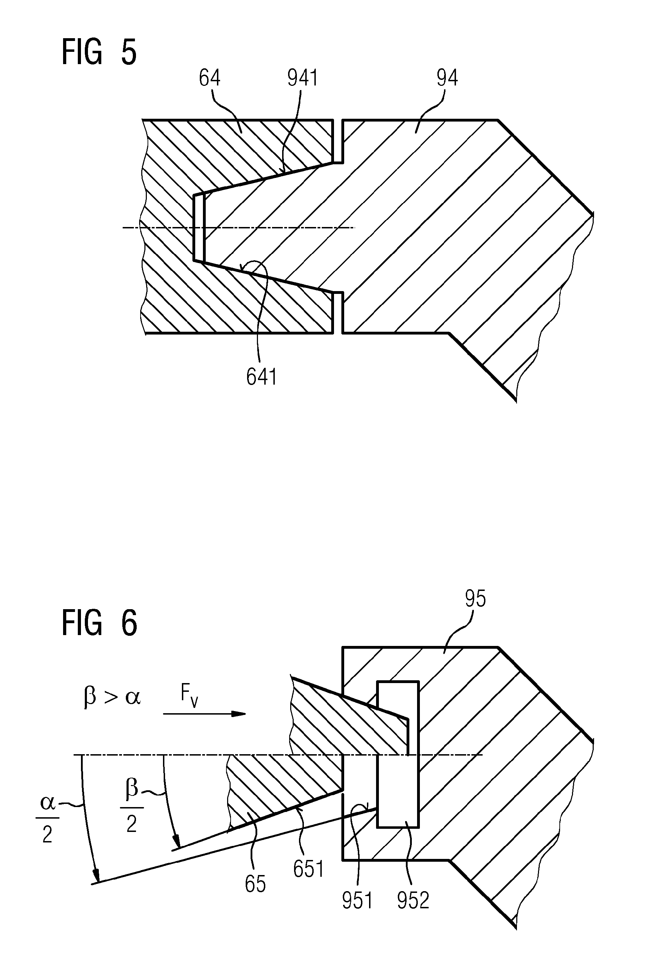

Entsprechend Figur 6 weist die Nut bei der fünften Variante eine Hinterschneidung 952 auf. An dieser an der Hinterschneidung 952 weist die Nut vorzugsweise eine Öffnung für ein druckbehaftetes Einbringen einer Flüssigkeit, beispielsweise Öl, zum Lösen der Ring-Nut-Verbindung auf. Des weiteren können zur Demontage auch Abdrückgewinde verwendet werden. Darüber hinaus kann das übertragbare Reibmoment in einen Kegelpreßverband erhöht werden, in dem der Ring eine konische Innen- und Außenfläche 651 mit einem ersten Öffnungswinkel (β) aufweist, und bei dem die Nut eine konische Innen- und Außenfläche 951 mit einem zweiten Öffnungswinkel (β) aufweist, der kleiner als der erste Öffnungswinkel (α) ist. Dies ermöglicht ein besseres Anliegen der Kontaktflächen 651, 951. Die Winkel sind vorteilhafterweise so zu wählen, daß sich über die Kontaktflächen 651, 951 eine möglichste gleichmäßige Pressung einstellt, beispielsweise über eine steifigkeitsoptimierte Gestaltung der Nut.

Durch Verwenden einer doppelt kegelförmig ausgeführten Ring-Nut-Verbindung mit unterschiedlichen Öffnungswinkeln entsteht an den Kontaktflächen 651, 951 ein deutlicher erhöhter Fügedruck, der durchmesserabhängig wiederum zu einem höheren übertragbaren Reibmoment führt. Aufgrund auf diese Weise erzielter ausreichend hoher Reibmomente kann die Anzahl formschlüssigen Elemente in der Ring-Nut-Verbindung reduziert werden. Formschlüssige Elemente können sogar vollständig entfallen.

Die Anwendung der vorliegenden Erfindung ist nicht auf das vorliegende Ausführungsbeispiel beschränkt.

## Patentansprüche

1. Planetengetriebe für eine Windkraftanlage oder eine Mühlenantriebssystem mit
- einem Sonnenrad, einem Hohlrad und mehreren in einem Planetenträger gelagerten Planetenrädern, die sowohl mit dem Sonnenrad als auch mit dem Planetenrad kämmen,
- einer Antriebs- und einer Abtriebswelle, die in einem Getriebegehäuse gelagert sind,
- einem am Hohlrad angeformten kombinierten Zentrierungs-und Verbindungselement, das mit einem korrespondierenden kombinierten Zentrierungs- und Verbindungselement am Getriebegehäuse in radialer Richtung formschlüssig und in Umfangsrichtung kraftschlüssig verbunden ist.

2. Planetengetriebe nach Anspruch 1,
bei dem das kombinierte Zentrierungs- und Verbindungselement am Hohlrad und das korrespondierende Zentrierungs- und Verbindungselement am Getriebegehäuse als Ring-Nut-Verbindung ausgestaltet sind.

3. Planetengetriebe nach Anspruch 2,
bei dem das kombinierte Zentrierungs- und Verbindungselement am Hohlrad ein sich axial erstreckender Ring mit konischem Profil ist, der in eine sich axial erstreckende umlaufende Nut am Getriebegehäuse eingreift, die das korrespondierende kombinierte Zentrierungs- und Verbindungselement bildet.

4. Planetengetriebe nach Anspruch 2,
bei dem das korrespondierende kombinierte Zentrierungs- und Verbindungselement am Getriebegehäuse ein sich axial erstreckender Ring mit konischem Profil ist, der in eine sich axial erstreckende umlaufende Nut am Hohlrad eingreift, die das kombinierte Zentrierungs- und Verbindungselement bildet.

5. Planetengetriebe nach einem der Ansprüche 3 oder 4,
bei dem das kombinierte Zentrierungs- und Verbindungselement am Hohlrad und das korrespondierende Zentrierungs- und Verbindungselement am Getriebegehäuse als Kegelpreßverband ausgestaltet sind.

6. Planetengetriebe nach Anspruch 5,
bei dem eine Fügekraft des Kegelpreßverbands mittels Schraubverbindungen realisiert ist.

7. Planetengetriebe nach einem der Ansprüche 2 bis 6,
bei dem die Nut eine jeweils zum Ring korrespondierende innere und äußere kegelige Kontaktfläche aufweist.

8. Planetengetriebe nach Anspruch 7,
bei dem die Nut eine Hinterschneidung aufweist.

9. Planetengetriebe nach Anspruch 8,
bei dem die Nut an der Hinterschneidung eine Öffnung für ein druckbehaftetes Einbringen einer Flüssigkeit zum Lösen der Ring-Nut-Verbindung aufweist.

10. Planetengetriebe nach einem der Ansprüche 2 bis 9,
bei dem Nut und Ring zumindest in einem Bereich kegeliger Kontaktflächen miteinander verklebt sind.

11. Planetengetriebe nach einem der Ansprüche 2 bis 9,
bei dem der Ring eine konische Innen- und Außenfläche mit einem ersten Öffnungswinkel aufweist, und bei dem die Nut eine konische Innen- und Außenfläche mit einem zweiten Öffnungswinkel aufweist, und bei dem der erste und zweite Öffnungswinkel verschieden sind.

12. Planetengetriebe nach Anspruch 11,
bei dem der erste Öffnungswinkel größer als der zweite Öffnungswinkel ist.
